**Europäisches Patentamt**

**European Patent Office**

**Office européen des brevets**

(19)

(11) Veröffentlichungsnummer : **0 417 598 B1**

(12)

# EUROPÄISCHE PATENTSCHRIFT

(45) Veröffentlichungstag der Patentschrift :
22.03.95 Patentblatt 95/12

(51) Int. Cl.⁶ : **G21F 1/10,** C08K 3/38

(21) Anmeldenummer : **90116919.3**

(22) Anmeldetag : **04.09.90**

(54) **Neutronenabsorbierendes Material.**

(30) Priorität : **15.09.89 DE 3930887**

(43) Veröffentlichungstag der Anmeldung :
**20.03.91 Patentblatt 91/12**

(45) Bekanntmachung des Hinweises auf die
Patenterteilung :
**22.03.95 Patentblatt 95/12**

(84) Benannte Vertragsstaaten :
**AT BE CH DE ES FR GB IT LI NL SE**

(56) Entgegenhaltungen :
**DE-A- 3 225 788
DE-B- 1 297 869
FR-A- 1 337 399
JP-A-60 194 394
US-A- 4 123 392**

(73) Patentinhaber : **HOECHST
AKTIENGESELLSCHAFT
D-65926 Frankfurt (DE)**

(72) Erfinder : **Berzen, Josef, Dipl.-Phys.
Im Torfveen 36
D-4200 Oberhausen 11 (DE)**

EP 0 417 598 B1

**Beschreibung**

Die Erfindung betrifft ein neutronenabsorbierendes Material. Es besteht aus ultrahochmolekularem Polyethylen, in das eine Borverbindung, bevorzugt Borcarbid, $B_4C$, eingebettet ist.

Im Gegensatz zu alpha- und beta-Teilchen besitzen Neutronen keine Ladung und können daher auf ihrem Wege durch die Materie Energie nicht durch Ionisierung verlieren. Infolgedessen ist ihr Durchdringungsvermögen außerordentlich groß. Neutronen werden ausschließlich durch die Wirkung der Kernkräfte beeinflußt und an Atomkernen gestreut. Solche Streuprozesse sind nach den Stoßgesetzen mit um so größeren Energieabgaben an den gestoßenen Körper verbunden, je ähnlicher seine Masse der Masse des stoßenden Körpers ist. Daher wird ein Neutronenstrahlbündel, das ohne wesentliche Schwächung durch meterdicke Bleiplatten hindurchtritt, beim Durchgang durch wasserstoffhaltige Substanzen von einigen cm Dicke sehr stark geschwächt. Im Mittel wird die Energie beim Zusammenstoß mit einem Proton auf $\frac{1}{e}$ herabgesetzt, während die Energieabgabe an Atomkernen höherer Masse infolge unelastischer Stöße geringer ist. Aus der Literatur ist bekannt, daß in Wasserstoff im Mittel 18 und in Kohlenstoff im Mittel 114 Stöße erforderlich sind, um ein Neutron auf thermische Energie abzubremsen. Diese thermischen, d.h. langsamen Neutronen lassen sich dann von Elementen mit hohem Wirkungsquerschnitt wie Cadmium oder Bor vollständig absorbieren.

Bei der Neutronenabsorption wird Bindungsenergie in Form von sekundärer Gammastrahlung frei. Sie ist abhängig vom Absorbermaterial und kann beachtlich hoch sein. So beträgt die Gammastrahlungsenergie bei der Absorption von Neutronen durch Cadmium 6 MeV, durch Wasserstoff 2,2 MeV und durch Bor lediglich 0,5 MeV.

Als Werkstoffe, die gegen Neutronenstrahlung schützen, setzt man insbesondere Wasser und Paraffine sowie Kunststoffe, die merkliche Mengen Wasserstoff enthalten wie Polyethylen, Polyester und Polyamide ein.

So verwendet man nach der Lehre der DE-AS 12 97 869 zum Schutz gegen Gamma- und Neutronenstrahlung Formkörper aus thermoplastischen oder duroplastischen Kunststoffen, in denen das Verhältnis Kohlenstoff zu Wasserstoff oder das Verhältnis Restatom zu Wasserstoff im Bereich von 1 : 2,1 bis 2 : 1 liegt und deren Molekulargewicht kleiner als 200.000 ist. Derartige Kunststoffe können zu den Hoch- und Niederdruckpolyethylenen, den Polypropylenen, der Alkylen-Propylen- bzw. Alkylen-Butylen-Mischpolymerisaten, den Polyamiden und den Polyestern gehören.

In der DE-AS 11 62 694 wird ein neutronenabsorbierendes Material beschrieben, bei dem granuliertes Polyethylen in einer flüssig bleibenden oder zu einem Kunststoff aushärtenden wasserstoffhaltigen Flüssigkeit eingebettet ist.

Die bekannten neutronenabsorbierenden Materialien weisen jedoch Eigenschaften auf, die ihre Anwendbarkeit begrenzen. So sind Kunststoffe zwar spezifisch leicht, jedoch bereitet ihre Verarbeitbarkeit häufig Schwierigkeiten. Überdies genügt ihr mechanisches Verhalten nicht immer allen Anforderungen und ihre Wärmeformbeständigkeiten sind oft nicht befriedigend.

Der Erfindung liegt die Aufgabe zugrunde, ein neutronenabsorbierendes Material bereitzustellen, welches nicht nur nach konventionellen Verfahren bearbeitet werden kann sondern auch mechanisch fest und gegen thermische Einflüsse widerstandsfähig ist und geringe Dichte aufweist.

Diese Aufgabe wird gelöst durch ein neutronenabsorbierendes Material, bei dem Bor in Polyethylen eingebettet ist. Es ist dadurch gekennzeichnet, daß die viskosimetrisch gemessene mittlere Molmasse des vorwiegend linearen Polyethylens mindestens $2{,}5 \cdot 10^6$ g/mol beträgt.

Lineare Polyethylene mit einer mittleren Molmasse von mindestens $2{,}5 \cdot 10^6$ g/mol und bis zu $1 \cdot 10^7$ g/mol werden auch als ultrahochmolekulare Polyethylene (PE-UHMW) bezeichnet. Unter der vorstehend quantifizierten Molmasse werden die viskosimetrisch bestimmten Werte verstanden. Ein Verfahren zu ihrer Messung ist z.B. in CZ-Chemietechnik 4 (1974), 129 ff beschrieben.

Die Herstellung von PE-UHMW ist bekannt. Sie kann nach verschiedenen Prozessen erfolgen. Ein bewährtes Verfahren, das unter niedrigem Druck mit Mischkatalysatoren aus Titan(III)-halogeniden und aluminiumorganischen Verbindungen arbeitet, ist in der DE-AS 23 61 508 beschrieben.

Ultrahochmolekulares Polyethylen zeichnet sich durch eine Reihe günstiger physikalischer Eigenschaften aus. Hervorzuheben sind sein hoher Verschleißwiderstand, sein niedriger Reibungskoeffizient gegenüber anderen Werkstoffen, sein ausgezeichnetes Zähigkeitsverhalten und seine bemerkenswerte Beständigkeit gegenüber zahlreichen Chemikalien.

Für das erfindungsgemäße neutronenabsorbierende Material hat sich PE-UHMW mit Molmassen zwischen $2{,}5 \cdot 10^6$ g/mol und $8 \cdot 10^6$ g/mol, insbesondere $3 \cdot 10^6$ g/mol und $6 \cdot 10^6$ g/mol besonders bewährt.

Um sicherzustellen, daß durch den beim Neutroneneinfang ablaufenden Kernprozeß keine langlebigen radioaktiven Isotope gebildet werden, muß das Polyethylen weitgehend frei von Verunreinigungen sein. Insbesondere dürfen die von der Herstellung noch vorhandenen Verbindungen, die als Katalysatoren oder Bestandteile von Katalysatoren Verwendung fanden einen Gehalt von 200 Gew.-ppm, vorzugsweise 150 Gew.-ppm, bezogen auf das Polymerisat, nicht übersteigen.

Weiterhin empfiehlt es sich, das PE-UHMW gegen Wärme-, Licht- und Oxidationseinflüsse zu schützen. Für die Stabilisatoren haben sich z.B. folgende Verbindungen allein oder in Kombination bewahrt: 4,4'-Thiobis-(3-methyl-6-tertiärbutylphenol-1), Dilauryl-thiodipropionat, Distearyl-thio-dipropionat, Tetrakis-[methylen-(3,5-ditertiärbutyl-4-hydroxy-hydrocinnamat)]-methan, n-Octadecyl-ß-(4'-hydroxy-3,5'-ditertiärbutylphenyl)-propionat, Bis-[3,3-bis(4'-hydroxy-3'-tertiärbutylphenyl)-butansäure]-glykolester. Sie werden im allgemeinen in Mengen von 0,1 bis 0,2 Gew.-%, bezogen auf die Gesamtmischung, zugegeben. Der Zusatz von Antioxydantien ist deshalb wichtig, weil Polyethylen unter der Einwirkung von Gammastrahlen in Gegenwart von Sauerstoff oxidiert wird. Es geht dann in niedermolekulare, wachsartige Produkte über, wird spröde und verliert seine Dehnbarkeit.

Als weiterer Bestandteil enthält das neue Material Bor in Form von Borverbindungen wie Borsäure ($H_3BO_3$). Besonders bewährt hat sich Borcarbid, $B_4C$. Wegen seiner thermischen Eigenschaften weniger geeignet ist Bornitrid. Auch Gemische verschiedener Borverbindungen können eingesetzt werden, doch zieht man einen chemisch einheitlichen Stoff vor. Borcarbid wird in der handelsüblichen Reinheit verwendet. Für die praktische Anwendung des neuen neutronenabsorbierenden Werkstoffs ist es wesentlich, daß er homogen ist. Daher empfiehlt es sich möglichst feinteiliges Borbarbid in das Polyethylen einzuarbeiten, d.h. Borcarbid einer Teilchengröße, die der Größe der Polyethylenpartikel entspricht. Es hat sich bewahrt, Borcarbid einer Teilchengröße von 10 bis 200 µm und insbesondere von 20 bis 80 µm zu verwenden. Dadurch wird erreicht, daß während der Verarbeitung des Materials eine Entmischung der Komponenten nicht eintritt und in seinem Gefüge Unregelmäßigkeiten nicht auftreten. Überraschenderweise büßt das PE-UHMW seine hervorragenden mechanischen Eigenschaften durch die Zugabe von Borcarbid kaum ein, bestimmte physikalische Merkmale, z.B. das Abriebverhalten werden sogar verbessert.

Der Borcarbidgehalt im neuen Werkstoff ist abhängig von der Schichtdicke, in der er angewandt wird. Es hat sich gezeigt, daß bei dünnen Materialstarken, d.h. bei Schichtdicken bis zu 5 mm die Abschirmeigenschaften mit zunehmendem $B_4C$-Anteil deutlich verbessert werden. Bei Schichtdicken oberhalb etwa 20 mm wirkt sich eine Erhöhung der $B_4C$-Konzentration im Werkstoff über 1% bezogen auf das Material hinsichtlich des Absorptionsverhalten kaum mehr aus. Bei vorgegebenem Schwächungsgrad kann daher die benötigte Schichtdicke zur Absorption thermischer Neutronen über den $B_4C$-Gehalt bestimmt werden.

Unter Berücksichtigung der angestrebten Materialeigenschaften, der Herstellung und der Verarbeitbarkeit des neuen Materials empfiehlt es sich, die $B_4C$-Konzentration auf Werte von 5 bis 50 Gew.-%, bevorzugt von 10 bis 40 Gew.-% und insbesondere von 20 bis 30 Gew.-%, jeweils bezogen auf Borcarbid enthaltendes Polyethylen, einzustellen.

Die Herstellung des neutronenabsorbierenden Materials der Erfindung erfolgt durch homogene Mischung der Ausgangsmaterialien PE-UHMW, Borverbindung und gegebenenfalls Additive in einem geeigneten Mischer und anschließendes Sintern des Gemisches unter Druck bei Temperaturen von 180 bis 250°C, insbesondere 200 bis 230°C. Der Sinterdruck beträgt von 5 bis 10 MPa, insbesondere von 8 bis 10 MPa. Auch das Abkühlen wird unter Druck vorgenommen, bewährt haben sich 3 bis 5 MPa, vorzugsweise 4 bis 5 MPa. Sinter- und Kühlzeit hängen von der Materialstärke und dem Füllstoffgehalt ab. So beträgt die Sinterzeit z.B. bei Platten von 60 mm Starke, die aus 70 Gew.-% Polyethylen und 30 Gew.-% $B_4C$ bestehen, 5 h.

Das neue Material läßt sich in üblicher Weise mechanisch bearbeiten, z.B. bohren, fräsen und sägen, selbstverständlich sind dabei die Eigenschaften des Borcarbids, insbesondere seine Härte, zu berücksichtigen; es kann durch Pressen geformt werden.

In dem folgenden Beispiel wird die Erfindung näher erläutert.

Beispiel

Für die Bestrahlungsversuche wurden Laborplatten von 140 mm Durchmesser aus PE-UHMW mit einer Molmasse von etwa $3 \cdot 10^6$ g/mol (R) (Hostalen GUR 412) mit 1, 5, 10, 20 und 30 Gew.-% Borcarbid in unterschiedlichen Stärken von 1, 5, 20 und 60 mm unter Standardbedingungen (Druck beim Sintern 5 MPa, Druck beim Abkühlen 10 MPa, Sinter- bzw. Kühlzeit abhängig von Materialstärke und Füllstoffgehalt) hergestellt. Als Vergleich diente ungefülltes PE-UHMW derselben Molmasse und in gleicher Abmessung.

Als Borcarbid wurde das Handelsprodukt Tetrabor F 280 des Elektroschmelzwerkes Kempten GmbH mit einer Korngröße von 22-59 µm eingesetzt.

Zur Herstellung der Laborplatten wurden die jeweiligen Komponenten homogen in einem Labormischer gemischt.

Die Bestrahlung der Proben erfolgte mit thermischen Neutronen, deren Energie kleiner als 1 eV ist.

Die Neutronenabsorptionskoeffizienten wurden nach folgender Formel berechnet:

$$I = I_o \cdot e^{-\Sigma_{tot} \cdot X}$$

Hierin bedeuten:

$X$      Dicke der Probe

$\Sigma_{tot}$      Gesamter Absorptionskoeffizient, der alle Absorptions- und Streuanteile in PE und Bor enthält.

$I_o$      Zählrate des Neutronenstrahls, die vor Einsatz jeder Probestärke gemessen wird, um Veränderungen der Reaktorleistung zu eliminieren.

$I$      Geschwächte Zählrate bei Schichtdicke X der Probe.

Die Meßergebnisse zeigen, daß bei geringen Schichtdicken die Abschirmung thermischer Neutronen durch das neue Material mit steigendem $B_4C$-Gehalt zunimmt. Bei großen Schichtstärken führen $B_4C$-Konzentrationen oberhalb etwa 1 Gew.-% (bezogen auf das mit $B_4C$ gefüllte PE-UHMW) zu keiner Verbesserung des Absorptionsverhaltens. Die Abschwächung ist dann also unabhängig von der Borcarbid-Konzentration.

| | Material-stärke (mm) | Nullzähl-rate $I_o$ (Teilchen/s) | Zählrate I mit Probe (Teilchen/s) | $\Sigma_{tot}$ (mm$^{-1}$) |
|---|---|---|---|---|
| Hostalen GUR | 1,08 | 5270 | 4172 | 0,2164 |
| | 5,25 | 5302 | 1881 | 0,1974 |
| | 20,1 | 5269 | 264,3 | 0,1489 |
| | 60,2 | 5243 | 11,303 | 0,1020 |
| + 1 % $B_4C$ | 1,11 | 5263 | 4100 | 0,2250 |
| | 5,24 | 5244 | 1490 | 0,2401 |
| | 20,3 | 5309 | 73,15 | 0,2111 |
| | 60,2 | 5249 | 1,155 | 0,1399 |
| + 5 % $B_4C$ | 1,06 | 5252 | 3654 | 0,3424 |
| | 4,76 | 5237 | 792,7 | 0,3967 |
| | 19,8 | 5229 | 5,497 | 0,3464 |
| | 58,8 | 5284 | 1,021 | 0,1454 |
| + 10 % $B_4C$ | 1,16 | 5248 | 3029 | 0,4736 |
| | 4,95 | 5276 | 357,1 | 0,5440 |
| | 19,7 | 5236 | 1,573 | 0,4117 |
| | 60,1 | 5298 | 0,919 | 0,1441 |
| + 20 % $B_4C$ | 1,00 | 5270 | 2484 | 0,7522 |
| | 5,02 | 5257 | 83,44 | 0,8253 |
| | 21,2 | 5225 | 0,986 | 0,4045 |
| | 60,3 | 5247 | 0,862 | 0,1445 |
| + 30 % $B_4C$ | 1,03 | 5297 | 1904 | 0,9934 |
| | 5,07 | 5202 | 28,87 | 1,0245 |
| | 20,7 | 5231 | 0,966 | 0,4153 |
| | 60,9 | 5298 | 0,856 | 0,1434 |

Ein Vergleich der Meßwerte ergibt, daß die Absorptionskoeffizienten bei geringen Materialstärken beachtlich höher sind als bei Stärken > 20 mm. Dieses Verhalten erklärt sich daraus, daß die thermischen Neutronen in dünneren Schichten fast vollständig absorbiert werden und der geringe Anteil im Neutronenstrahlbündel enthaltener schneller Neutronen in dickeren Materialschichten auf niedrigere Geschwindigkeiten abgebremst und dann absorbiert wird. Für diese thermalisierten, ursprünglich schnellen Neutronen ist mit einem wesentlich schwächeren Absorptionskoeffizient zu rechnen.

In der nachfolgenden Tabelle ist nach der Gleichung zur Berechnung des Absorptionskoeffizienten die jeweilige Materialstärke angegeben, bei der 95% der thermischen Neutronen absorbiert sind. Für diese Berechnung wurden aus den Absorptionsmessungen für jeden $B_4C$-Gehalt die Mittelwerte des Absorptionskoeffizienten für dünne Materialstärken ($\leq 5$ mm) zugrundegelegt.

| | Schichtdicke (mm) bei 95 % Absorption | $\sum_{tot} (mm^{-1})$ |
|---|---|---|
| PE-UHMW (Molmasse: etwa $4 \cdot 10^6$ mol/g) | 13,6 | 0,22 |
| + 1 % $B_4C$ | 12,0 | 0,25 |
| + 5 % $B_4C$ | 7,7 | 0,39 |
| + 10 % $B_4C$ | 5,7 | 0,53 |
| + 20 % $B_4C$ | 3,8 | 0,80 |
| + 30 % $B_4C$ | 3,0 | 1,02 |

Es ist deutlich zu erkennen, daß sich mit zunehmendem $B_4C$-Gehalt die Schichtdicke erheblich reduziert.

**Patentansprüche**

1. Neutronenabsorbierendes Material, bei dem Bor in Polyethylen eingebettet ist, dadurch gekennzeichnet, daß die viskosimetrisch gemessene mittlere Molmasse des vorwiegend linearen Polyethylens mindestens $2,5 \cdot 10^6$ g/mol beträgt.

2. Neutronenabsorbierendes Material nach Anspruch 1, dadurch gekennzeichnet, daß die Molmasse des Polyethylens $2,5 \cdot 10^6$ bis $8 \cdot 10^6$ g/mol, insbesondere $3 \cdot 10^6$ bis $6 \cdot 10^6$ g/mol beträgt.

3. Neutronenabsorbierendes Material nach Anspruch 1 oder 2, dadurch gekennzeichnet, daß in dem Polyethylen Bor in Form von Borcarbid $B_4C$ enthalten ist.

4. Neutronenabsorbierendes Material nach Anspruch 3, dadurch gekennzeichnet, daß das Borcarbid eine Teilchengröße von 10 bis 200 $\mu$m, insbesondere 20 bis 80 $\mu$m hat.

5. Neutronenabsorbierendes Material nach Anspruch 3 oder 4, dadurch gekennzeichnet, daß die Borcarbid-Konzentration 5 bis 50 Gew.-%, vorzugsweise 10 bis 40 Gew.-% und insbesondere 20 bis 30 Gew.-%, bezogen auf das neutronenabsorbierende Material, beträgt.

6. Neutronenabsorbierendes Material nach einem oder mehreren der Ansprüche 1 bis 5, dadurch gekennzeichnet, daß es Stabilisatoren enthält.

7. Verfahren zur Herstellung von neutronenabsorbierendem Material nach einem oder mehreren der Ansprüche 1 bis 6, dadurch gekennzeichnet, daß Polyethylen, Borverbindung und gegebenenfalls Additive gemischt, unter Druck bei Temperaturen von 180 bis 250°C, insbesondere 200 bis 230°C, einem Druck von 5 bis 10 MPa, insbesondere 8 bis 10 MPa gesintert und das Sinterprodukt unter einem Druck von 3 bis 5 MPa, vorzugsweise 4 bis 5 MPa abgekühlt wird.

**Claims**

1.  A neutron-absorbing material, in which boron is embedded in polyethylene, wherein the mean molecular mass, measured by viscometry, of the predominantly linear polyethylene is at least $2.5 \times 10^6$ g/mol.

2.  A neutron-absorbing material as claimed in claim 1, wherein the molecular mass of the polyethylene is $2.5 \times 10^6$ to $8 \times 10^6$ g/mol, especially $3 \times 10^6$ to $6 \times 10^6$ g/mol.

3.  A neutron-absorbing material as claimed in claim 1 or 2, wherein the polyethylene contains boron in the form of boron carbide $B_4C$.

4.  A neutron-absorbing material as claimed in claim 3, wherein the boron carbide has a particle size of from 10 to 200 $\mu$m, especially 20 to 80 $\mu$m.

5.  A neutron-absorbing material as claimed in claim 3 or 4, wherein the concentration of boron carbide is 5 to 50 % by weight, preferably 10 to 40 % by weight and especially 20 to 30 % by weight, relative to the neutron-absorbing material.

6.  A neutron-absorbing material as claimed in one or more of claims 1 to 5, which contains stabilizers.

7.  A process for producing a neutron-absorbing material as claimed in one or more of claims 1 to 6, which comprises mixing polyethylene, boron compound and, if desired, additives, sintering the mixture under pressure at temperatures of from 180 to 250°C, especially 200 to 230°C, at a pressure of from 5 to 10 MPa, especially 8 to 10 MPa, and cooling the sintered product under a pressure of from 3 to 5 MPa, preferably 4 to 5 MPa.

**Revendications**

1.  Matériau absorbant les neutrons, dans lequel du bore est incorporé dans du polyéthylène, caractérisé en ce que la masse moyenne mesurée par viscosimétrie du polyéthylène essentiellement linéaire est au moins $2,5 \times 10^6$ g/mol.

2.  Matériau absorbant les neutrons selon la revendication 1, caractérisé en ce que la masse molaire du polyéthylène est comprise entre $2,5 \times 10^6$ et $8 \times 10^6$ g/mol, notamment entre $3 \times 10^6$ et $6 \times 10^6$ g/mol.

3.  Matériau absorbant les neutrons selon la revendication 1 ou 2, caractérisé en ce que du bore est incorporé dans le polyéthylène sous forme de carbure de bore $B_4C$.

4.  Matériau absorbant les neutrons selon la revendication 3, caractérisé en ce que le carbure de bore a une granulométrie de 10 à 200 $\mu$m, notamment de 20 à 80 $\mu$m.

5.  Matériau absorbant les neutrons selon la revendication 3 ou 4, caractérisé en ce que la concentration en carbure de bore est de 5 à 50 % en poids, de préférence 10 à 40 % en poids et notamment 20 à 30 % en poids, rapportée au matériau absorbant les neutrons.

6.  Matériau absorbant les neutrons selon l'une ou plusieurs des revendications 1 à 5, caractérisé en ce qu'il contient des stabilisants.

7.  Procédé de préparation de matériau absorbant les neutrons selon l'une ou plusieurs des revendications 1 à 6, caractérisé en ce qu'on mélange le polyéthylène, le composé du bore et le cas échéant des additifs, on fritte sous pression à des températures de 180 à 250°C, notamment de 200 à 230°C, sous une pression de 5 à 10 MPa, notamment 8 à 10 MPa et on refroidit le produit fritté sous une pression de 3 à 5 MPa, de préférence 4 à 5 MPa.